# EUROPÄISCHE PATENTSCHRIFT

(11) **EP 2 553 244 B1**
(45) Veröffentlichungstag und Bekanntmachung des Hinweises auf die Patenterteilung: **27.11.2013**
(21) Anmeldenummer: 11710788.8
(22) Anmeldetag: 29.03.2011
(51) Int. Cl.: F02C 7/224, F03G 6/06, F24J 2/00

(54) **VERFAHREN ZUM ERHÖHEN DES WIRKUNGSGRADES EINER MIT EINER GASTURBINE AUSGESTATTETEN KRAFTWERKSANLAGE SOWIE KRAFTWERKSANLAGE ZUR DURCHFÜHRUNG DES VERFAHRENS**
METHOD FOR INCREASING THE EFFICIENCY OF A POWER PLANT EQUIPPED WITH A GAS TURBINE, AND POWER PLANT FOR CARRYING OUT THE METHOD
PROCÉDÉ POUR ACCROÎTRE LE RENDEMENT D'UNE CENTRALE ÉQUIPÉE D'UNE TURBINE À GAZ AINSI QUE CENTRALE POUR METTRE EN OEUVRE LE PROCÉDÉ

(30) Priorität: 01.04.2010 CH 4772010
(43) Veröffentlichungstag der Anmeldung: 06.02.2013
(73) Patentinhaber: Alstom Technology Ltd, 5400 Baden (CH)
(72) Erfinder: JOSUHN-KADNER, Burkhard, 4310 Rheinfelden (CH); CARRONI, Richard, CH-5443 Niederrohrdorf (CH)
(86) Internationale Anmeldenummer: PCT/EP2011/054766
(87) Internationale Veröffentlichungsnummer: WO 2011/120942

(56) Entgegenhaltungen:
- WO-A1-00/65213
- GB-A- 2 449 181
- US-B1- 6 233 914
- HONG H ET AL: "Solar thermal power cycle with integration of methanol decomposition and middle-temperature solar thermal energy", SOLAR ENERGY, PERGAMON PRESS. OXFORD, GB LNKD- DOI:10.1016/J.SOLENER.2004.06.019, Bd. 78, Nr. 1, 1. Januar 2005 (2005-01-01) , Seiten 49-58, XP004692787, ISSN: 0038-092X

## Beschreibung

### TECHNISCHES GEBIET

Die vorliegende Erfindung bezieht sich auf das Gebiet der Kraftwerkstechnik. Sie betrifft ein Verfahren zum Erhöhen des Wirkungsgrades einer mit einer Gasturbine ausgestatteten Kraftwerksanlage und insbesondere ein Verfahren zur Vorwärmung von Brennstoff. Die Erfindung betrifft zudem eine Kraftwerksanlage zur Durchführung des Verfahrens.

### STAND DER TECHNIK

Durch die Erhöhung der Brennstofftemperatur in einer Gasturbine kann die Verteilung der Brennstoff-Luft-Mischung in den Brennern der Gasturbine verbessert werden, was zu einer Verringerung der NOx-Emissionen führt. Wichtiger ist, dass im Fall eines Kombikraftwerks (Combined Cycle Power Plant CCPP) der Gesamtwirkungsgrad der Gasturbine und damit auch der Kombianlage verbessert werden kann, wenn die Brennstoffvorwärmung in den Wasser-Dampf-Kreislauf der Kombianlage integriert wird. Im Fall einer Kombianlage vom Typ KA26-1 der Anmelderin (mit Gasturbinen vom Typ GT26) führt bei Volllast die Differenz zwischen dem nicht vorgewärmten, 15°C kalten Brennstoff und dem auf >100°C vorgewärmten Brennstoff zu einer Erhöhung des Kombianlagen-Wirkungsgrads bei einem geringfügigen Abfall der abgegebenen Leistung. Der Abfall in der Ausgangsleistung rührt daher, dass dem Wasser-Dampf-Kreislauf heisses Wasser zur Vorwärmung des Brennstoffs entzogen wird.

Gegenwärtig wird Erdgas als Brennstoff auf >100°C vorgewärmt. Die maximale Temperatur ist hauptsächlich durch die Fähigkeit der Anlagen des Brennstoffsystems bedingt, mit höheren Temperaturen umzugehen, z.B. bei den Regelventilen mit nicht-metallischen Dichtungen. Es gibt jedoch Bestrebungen, die Brennstofftemperatur weiter zu erhöhen.

Das Vorwärmen des Brennstoffs ist aus dem Stand der Technik grundsätzlich bekannt. So lehrt beispielsweise die EP 0 095 555, den Brennstoff in Ölbrennern vorzuwärmen und/oder zu verdampfen, um den Verbrennungsprozess zu verbessern. US 6,233,914 offenbart ein Verfahren zur thermischen Vorbehandlung eines Brennstoffs, bei dem Solardampf zur Reformierung in den Brennstoff eingedüst wird. Aus der EP 0 903 484 ist es bekannt, den Brennstoff in einem Wärmeübertrager mittels Heissgas aus der Gasturbinenanlage vorzuwärmen. US 6,269,626 oder der DE19512466 zeigen ähnliche Systeme für Kombikraftwerke auf.

Ausserdem wird in GB2449181 vorgeschlagen, bei Kombikraftwerken Solarwärme dafür zu benutzen, die Verbrennungsluft aufzuheizen.

Obgleich sich derartige Technologien bewährt haben, bleiben einige Nachteile:
- Normalerweise wird hochwertige Wärme bei Temperaturen bis >200°C benutzt, um den Brennstoff vorzuwärmen. Diese Wärme könnte jedoch in der Dampfturbine besser verwendet werden, um die Leistung und den Wirkungsgrad der Anlage zu steigern.
- Wenn die Gasturbine nur für sich in einem einfachen Kreislauf betrieben wird, steht aus dem Wasser-Dampf-Kreislauf keine Wärme zum Vorwärmen des Brennstoffs zur Verfügung.

### DARSTELLUNG DER ERFINDUNG

Es ist Aufgabe der Erfindung, ein Verfahren zum Erhöhen des Wirkungsgrades einer mit einer Gasturbine ausgestatteten Kraftwerksanlage zu schaffen, welches die Nachteile bekannter Verfahren vermeidet und sich insbesondere auch bei Gasturbinen im einfachen Kreislauf einsetzen lässt, sowie eine Kraftwerksanlage zur Durchführung des Verfahrens anzugeben

Die Aufgabe wird durch die Gesamtheit der Merkmale der unabhängigen Ansprüche gelöst. Wesentlich für die Erfindung ist, dass für die Vorwärmung des Brennstoffs Solarwärme verwendet wird.

Eine Verfahren gemäss der Erfindung ist dadurch gekennzeichnet, dass die Solarwärme in einem Solarfeld erzeugt und mittels eines ersten Wärmeübertragers und einem ersten Wärmeübertragungsmittel auf den der Gasturbine zugeführten Brennstoff übertragen wird.

In einer Ausführung des Verfahrens wird zusätzlich die Solarwärme vom Solarfeld über einen Zwischenkreislauf auf das erste Wärmeübertragungsmittel übertragen. Hierzu wird zunächst die Solarwärme in einem Zwischenkreislauf, der zwischen Solarfeld und dem ersten Wärmeübertrager geschaltet ist, in einem zweiten Wärmeübertrager auf ein zweites Wärmeübertragungsmittel übertragen. Mittels dem zweiten Wärmeübertragungsmittel wird die Solarwärme sodann im ersten Wärmeübertrager auf das erste Wärmeübertragungsmedium übertragen. Dieses Verfahren mittels Zwischenkreislauf eröffnet insbesondere Möglichkeiten zur Speicherung von Solarwärme für eine Vorwärmung des Brennstoffs während Stunden mit verminderter Sonneneinstrahlung.

Zur Übertragung der Solarwärme auf den Brennstoff wird in einer Ausführung des Verfahrens mittels der Solarwärme heisses Wasser erzeugt.

In einer weiteren Ausführung wird zur Übertragung der Solarwärme auf den Brennstoff mittels der Solarwärme Dampf erzeugt.

In einer weiteren Ausführung des Verfahrens wird zur Übertragung von Solarwärme auf den Brennstoff ein ÖI erhitzt.

Bevorzugt wird als Brennstoff Erdgas verwendet, wobei das Erdgas mittels der Solarwärme auf über 50°C vorgewärmt wird.

Noch günstiger ist es bezüglich dem Wirkungsgrad der Kraftanlage und/oder den NOx-Emissionen, wenn das Erdgas mittels der Solarwärme auf über 150°C vorgewärmt wird.

Die erfindungsgemässe Kraftwerksanlage umfasst eine Gasturbine mit einem Verdichter zum Verdichten von Verbrennungsluft, eine Brennkammer, in welcher durch Verbrennung eines Brennstoffs mittels der verdichteten Verbrennungsluft Heissgas erzeugt wird, eine Turbine, in welcher das erzeugte Heissgas unter Arbeitsleistung entspannt wird, sowie Mittel zur Vorwärmung des der Brennkammer zugeführten Brennstoffs, wobei die Vorwärmmittel mit einer Quelle für Solarwärme in Verbindung stehen.

In einer Ausführung der Erfindung ist die Quelle für die Solarwärme ein Solarfeld, welches insbesondere Kollektoren umfasst. Solche Kollektoren können z.B. Parabolrinnen-Kollektoren, Fresnel-Elemente oder eine Heliostatenanlage umfassen.

In einer weiteren Ausführung der Erfindung ist die Quelle für die Solarwärme eine flächige Solar-Anlage, wie zum Beispiel eine auf einem Hausdach oder ähnlich geeigneter Fläche angeordnete Solar-Anlage. Diese sind insbesondere für eine kostengünstige Erwärmung des Wärmeübertragungsmittels, beispielsweise Wasser, auf bis zu 130°C geeignet.

Die Quelle für die Solarwärme kann aber auch ein Wärmespeicher für Solarwärme umfassen. Dies ist insbesondere dann der Fall, wenn die Brennstoffvorwärmung auch nachts oder während sonnenarmen Stunden erfolgen soll.

Eine Ausgestaltung der Kraftwerksanlage nach der Erfindung gemäss dem unabhängigen Anspruch zeichnet sich dadurch aus, dass die Wärmeübertragungsmittel einen in eine Brennstoffzuleitung geschaltete ersten Wärmeübertrager umfassen, der auf der Primärseite von einem Solarwärme transportierenden Wärmeübertragungsmittel durchströmt wird.

Insbesondere ist dabei das Solarwärme transportierende Mittel Wasser oder Dampf oder ein ÖI.

Vorzugsweise kann zwischen der Solarwärmequelle und dem ersten Wärmeübertrager ein Zwischenkreislauf mit einem zweiten Wärmeübertrager angeordnet sein. Dieser zweite Wärmeübertrager kann insbesondere zur Speicherung von Wärme eingesetzt werden, um eine Vorwärmung des Brennstoffes während sonnenarmen oder sonnenlosen Stunden zu gewährleisten.

Eine weitere Ausgestaltung ist dadurch gekennzeichnet, dass die Gasturbine als Gasturbine mit sequentieller Verbrennung mit zwei Brennkammern und zwei Turbinen ausgebildet ist, und dass der Brennstoff für beide Brennkammern mittels Solarwärme vorgewärmt wird.

Insbesondere kann die Gasturbine Teil eines einen Wasser-Dampf-Kreislauf umfassenden Kombikraftwerks sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das prinzipielle Schema einer Kombikraftwerksanlage mit Brennstoffvorwärmung durch ein Solarfeld gemäss einem Ausführungsbeispiel der Erfindung; und
- Fig. 2: eine Ausgestaltung des Anlagenteils aus Fig. 1, der für die solare Brennstoffvorwärmung zuständig ist.

### WEGE ZUR AUSFÜHRUNG DER ERFINDUNG

Im Rahmen der vorliegenden Erfindung wird vorgeschlagen, den Brennstoff für eine Gasturbine mittels Solarwärme vorzuwärmen, unabhängig davon, ob die Gasturbine für sich allein betrieben wird oder Teil einer Kombianlage mit Wasser-Dampf-Kreislauf ist. Die Solarwärme wird von einer geeigneten solarthermischen Anlage abgeleitet, die wahlweise heisses Wasser oder Dampf erzeugt. Die dann zur Verfügung stehende, freie Solarwärme wird in einem Wärmeübertrager auf den vorzuwärmenden Brennstoff übertragen. Der Wirkungsgrad der Anlage kann dadurch um über 0,6% gesteigert werden, ohne dass sich die Ausgangsleistung verringert. Noch grössere Vorteile ergeben sich, wenn der Brennstoff durch die Solarwärme beispielsweise auf Temperaturen >150°C, idealerweise auf bis zu 250°C vorgewärmt wird.

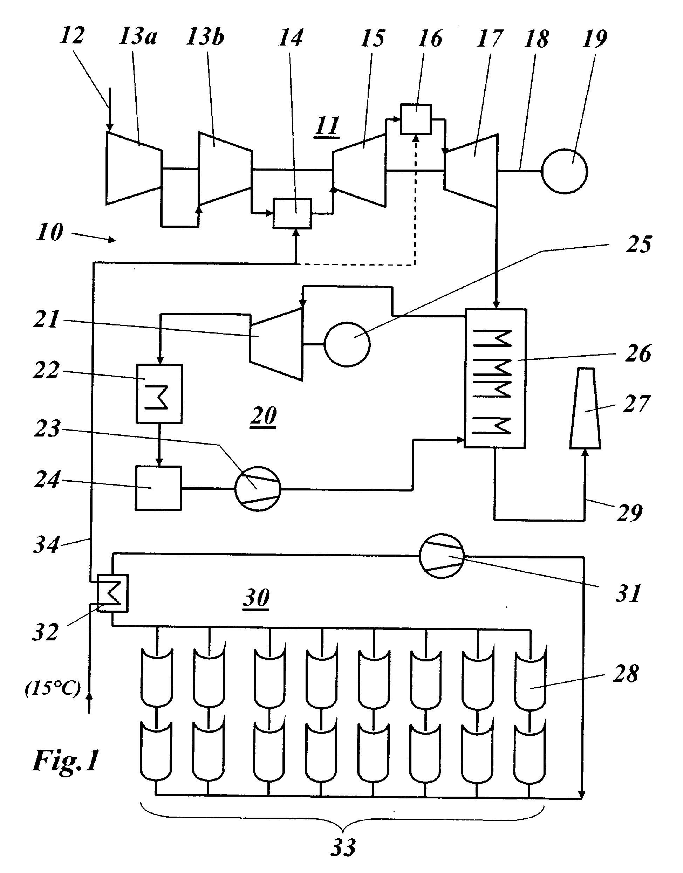

Ein stark vereinfachtes Anlagenschema eines Kombikraftwerks gemäss einem Ausführungsbeispiel der Erfindung ist in Fig. 1 wiedergegeben. Das Kombikraftwerk 10 mit solarer Brennstoffvorwärmung der Fig. 1 umfasst eine Gasturbine 11, einen Wasser-Dampf-Kreislauf 20 mit einer Dampfturbine 21 mit sequentieller Verbrennung, und einen Solarkreislauf 30 mit einem Solarfeld 33. Die Dampfturbine 11 besteht im vorliegenden Beispiel aus zwei hintereinander geschalteten Verdichtern 13a, 13b, die über einen Lufteinlass 12 angesaugte Verbrennungsluft verdichten und zur Verbrennung eines Brennstoffs an eine erste Brennkammer 14 abgeben. Das erzeugte Heissgas wird in einer ersten Turbine 15 unter Arbeitsleistung entspannt, in einer zweiten Brennkammer 16 noch einmal erhitzt und durch eine zweite Turbine 17 geleitet. Verdichter 13a, 13b und Turbinen 15, 17 sind über eine Welle 18 mit einem Generator 19 verbunden.

Das aus der zweiten Turbine 17 austretende, immer noch heisse Abgas wird durch einen Abhitzedampferzeuger (Heat Recovery Steam Generator HRSG) 26 geleitet, wo es Dampf für den Wasser-Dampf-Kreislauf 20 erzeugt, in den der Abhitzedampferzeuger 26 eingebunden ist. Nach dem Durchströmen des Abhitzedampferzeugers 26 tritt das Abgas über eine Abgasleitung 29 durch einen Abgaskamin 27 nach aussen.

Der Wasser-Dampf-Kreislauf 20 wird grundsätzlich gebildet aus der mit einem Generator 25 verbundenen Dampfturbine 21, einem Kondensator 22, einem Speisewasserkessel 24, einer Speisewasserpumpe 23 und dem Abhitzedampferzeuger 26.

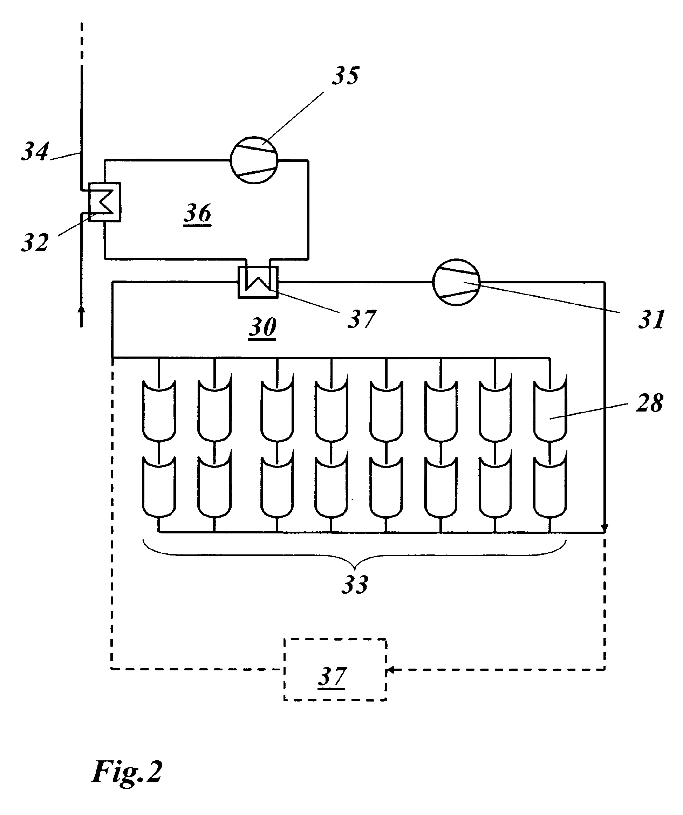

Eine Brennstoffzuleitung 34 für gasförmigen Brennstoff, beispielsweise Erdgas, von einer Temperatur von beispielsweise 15°C führt zu einem Wärmeübertrager 32 und von dort zu einer Brennkammer 14, bzw. zwei Brennkammern 14, 16 bei sequentieller Verbrennung. Über den Wärmeübertrager 32 wird dem Brennstoff zur Vorwärmung Wärmeenergie aus dem Solarkreislauf 30 zugeführt, der durch das Solarfeld 33, mehreren Parabolrinnen-Kollektoren 28, einer Pumpe 31 und der Primärseite des Wärmeübertragers 32 gebildet wird. Selbstverständlich können dem Solarkreislauf 30 zusätzlich Speichermittel (Wärmespeicher 37 in Fig. 2) zum Speichern der Solarwärme für den Betrieb in sonnenlosen oder sonnenarmen Zeiten (z.B. bei Nacht) zugeordnet werden. Ebenso ist es denkbar, anstelle der Parabolrinnen-Kollektoren 28, Fresnelelemente wie z.B. Fresnelspiegel, ausgerüstete Kollektoren oder Heliostatenanlagen, z.B mit Solarturm, einzusetzen. Auch Solar-Anlagen ohne Kollektoren, die flächig angeordnet sind, eignen sich insbesondere für die Erwärmung eines Wärmeübertragungsmittels auf 110-130°C.

Grundsätzlich kann die Solarwärme aus dem Solarfeld 33 - wie in Fig. 1 gezeigt-direkt über den Wärmeübertrager 32 abgegeben werden. Wenn im Solarkreislauf 30 Thermoöl als Wärmeübertragungsmittel eingesetzt wird, wird der Wärmeübertrager 32 primärseitig vom Thermoöl durchströmt. Es ist aber auch denkbar, gemäss Fig. 2 zwischen das Solarfeld 33 und den in der Brennstoffzuleitung 34 liegenden Wärmeübertrager 32 einen Zwischenkreis 36 zwischenzuschalten, der einen weiteren Wärmeübertrager 37 und eine eigene Pumpe 35 enthält. In dem Zwischenkreis 36 kann als Wärmeüberträgermittel Wasser oder Dampf benutzt werden. Wenn für Zeiten fehlender oder geringer Sonneneinstrahlung Solarwärme aus dem Solarfeld 33 in einem zugeordneten Wärmespeicher (z.B. einem Salzspeicher) 37 abgespeichert und vorgehalten wird (gestrichelter Kreis in Fig. 2), kann die Brennstoffvorwärmung mittels Solarwärme durchgehend aufrechterhalten werden.

### BEZUGSZEICHENLISTE

- 10: Kombikraftwerk
- 11: Gasturbine (z.B. mit sequentieller Verbrennung)
- 12: Lufteinlass
- 13a,13b: Verdichter
- 14,16: Brennkammer
- 15,17: Turbine
- 18: Welle
- 19,25: Generator
- 20: Wasser-Dampf-Kreislauf
- 21: Dampfturbine
- 22: Kondensator
- 23: Speisewasserpumpe
- 24: Speisewasserkessel
- 26: Abhitzedampferzeuger (HRSG)
- 27: Abgaskamin
- 28: Parabolrinnen-Kollektor
- 29: Abgasleitung
- 30: Solarkreislauf
- 31,35: Pumpe
- 32,37: Wärmeübertrager
- 33: Solarfeld
- 34: Brennstoffzuleitung
- 36: Zwischenkreislauf
- 37: Wärmespeicher

## Patentansprüche

1. Verfahren zum Erhöhen des Wirkungsgrades einer mit einer Gasturbine (11) ausgestatteten Kraftwerksanlage (10), bei welchem Verfahren ein der Gasturbine (11) zugeführter Brennstoff vorgewärmt wird, **dadurch gekennzeichnet, dass** für die Vorwärmung des Brennstoffs Solarwärme verwendet wird.

2. Verfahren nach Anspruch 1, **dadurch gekennzeichnet, dass** die Solarwärme in einem Solarfeld (33) erzeugt und mittels eines ersten Wärmeübertragers (32) und einem ersten Wärmeübertragungsmittel auf den der Gasturbine (11) zugeführten Brennstoff übertragen wird.

3. Verfahren nach Anspruch 2, **dadurch gekennzeichnet, dass** die Solarwärme vom Solarfeld (33) über einen Zwischenkreislauf (36) auf das erste Wärmeübertragungsmittel übertragen wird.

4. Verfahren nach Anspruch 3, **dadurch gekennzeichnet, dass** zur Übertragung der Solarwärme auf den Brennstoff mittels der Solarwärme Wasser erhitzt wird.

5. Verfahren nach Anspruch 3, **dadurch gekennzeichnet, dass** zur Übertragung der Solarwärme auf den Brennstoff mittels der Solarwärme Dampf erzeugt wird.

6. Verfahren nach Anspruch 3, **dadurch gekennzeichnet, dass** zur Übertragung der Solarwärme auf den Brennstoff mittels der Solarwärme ÖI erhitzt wird.

7. Verfahren nach einem der Ansprüche 1 bis 6, **dadurch gekennzeichnet, dass** als Brennstoff Erdgas verwendet wird, und dass das Erdgas mittels der Solarwärme auf mehr als 50°C vorgewärmt wird.

8. Verfahren nach Anspruch 7, **dadurch gekennzeichnet, dass** das Erdgas mittels der Solarwärme auf mehr als 150°C vorgewärmt wird.

9. Kraftwerksanlage (10) zur Durchführung des Verfahrens, umfassend eine Gasturbine (11) mit einem Verdichter (13a, 13b) zum Verdichten von Verbrennungsluft, eine Brennkammer (14, 16), in welcher durch Verbrennung eines Brennstoffs mittels der verdichteten Verbrennungsluft Heissgas erzeugt wird, eine Turbine (15, 17), in welcher das erzeugte Heissgas unter Arbeitsleistung entspannt wird, sowie Mittel (32, 34) zur Vorwärmung des der Brennkammer (14, 16) zugeführten Brennstoffs, **dadurch gekennzeichnet, dass** die Vorwärmmittel (32, 34) mit einer Quelle (33, 37) für Solarwärme in Verbindung stehen.

10. Kraftwerksanlage nach Anspruch 9, **dadurch gekennzeichnet, dass** die Quelle für die Solarwärme ein Solarfeld (33) ist.

11. Kraftwerksanlage nach Anspruch 10, **dadurch gekennzeichnet, dass** das Solarfeld (33) Parabolrinnen-Kollektoren (28), Fresnel-Elemente oder eine Heliostatenanlage umfasst.

12. Kraftwerksanlage nach Anspruch 8, **dadurch gekennzeichnet, dass** die Quelle für die Solarwärme einen Wärmespeicher (37) für Solarwärme umfasst.

13. Kraftwerksanlage nach einem der Ansprüche 9 bis 12, **dadurch gekennzeichnet, dass** die Vorwärmmittel einen ersten Wärmeübertrager (32) umfassen, der in die Brennstoffzuleitung (34) geschaltet ist und auf der Primärseite von einem Solarwärme transportierenden Mittel durchströmt wird.

14. Kraftwerksanlage nach Anspruch 13, **dadurch gekennzeichnet, dass** das Solarwärme transportierende Mittel Wasser oder Dampf oder ÖI ist.

15. Kraftwerksanlage nach Anspruch 13 oder 14, **dadurch gekennzeichnet, dass** zwischen der Solarwärmequelle (33, 37) und dem ersten Wärmeübertrager (32) ein Zwischenkreislauf (36) mit einem zweiten Wärmeübertrager (37) angeordnet ist.

16. Kraftwerksanlage nach einem der Ansprüche 9 bis 15, **dadurch gekennzeichnet, dass** die Gasturbine (11) als Gasturbine mit sequentieller Verbrennung mit zwei Brennkammern (14, 16) und zwei Turbinen (15, 17) ausgebildet ist, und dass der Brennstoff für beide Brennkammern (14, 16) mittels Solarwärme vorgewärmt wird.

17. Kraftwerksanlage nach einem der Ansprüche 9 bis 16, **dadurch gekennzeichnet, dass** die Gasturbine (11) Teil eines einen Wasser-Dampf-Kreislauf (20) umfassenden Kombikraftwerks (10) ist.

## Claims

1. A method for increasing the efficiency of a power plant (10) which is equipped with a gas turbine (11), in which method a fuel which is supplied to the gas turbine (11) is preheated, **characterized in that** solar heat is used for the preheating of the fuel.

2. The method as claimed in claim 1, **characterized in that** the solar heat is generated in a solar array (33) and is transferred by means of a first heat exchanger (32) and a first heat transfer medium to the fuel which is supplied to the gas turbine (11).

3. The method as claimed in claim 2, **characterized in that** the solar heat is transferred from the solar array (33) to the first heat transfer medium by means of an intermediate circuit (36).

4. The method as claimed in claim 3, **characterized in that**, for the transfer of the solar heat to the fuel, water is heated by means of the solar heat.

5. The method as claimed in claim 3, **characterized in that**, for the transfer of the solar heat to the fuel, steam is generated by means of the solar heat.

6. The method as claimed in claim 3, **characterized in that**, for the transfer of the solar heat to the fuel, oil is heated by means of the solar heat.

7. The method as claimed in one of claims 1 to 6, **characterized in that** natural gas is used as fuel, and **in that** the natural gas is preheated to over 50 °C by means of the solar heat.

8. The method as claimed in claim 7, **characterized in that** the natural gas is preheated to over 150°C by means of the solar heat.

9. A power plant (10) for carrying out the method, comprising a gas turbine (11) with a compressor (13a, 13b) for compressing combustion air, a combustion chamber (14, 16) in which hot gas is generated by the combustion of a fuel by means of the compressed combustion air, a turbine (15, 17) in which the hot gas generated is expanded, performing work, and means (32, 34) for preheating the fuel which is supplied to the combustion chamber (14, 16), **characterized in that** the preheating means (32, 34) are connected to a source (33, 37) for solar heat.

10. The power plant as claimed in claim 9, **characterized in that** the source for the solar heat is a solar array (33).

11. The power plant as claimed in claim 10, **characterized in that** the solar array (33) comprises parabolic trough collectors (28), Fresnel elements or a heliostat installation.

12. The power plant as claimed in claim 8, **characterized in that** the source for the solar heat comprises a heat store (37) for solar heat.

13. The power plant as claimed in one of claims 9 to 12, **characterized in that** the preheating means comprise a first heat exchanger (32) which is connected into the fuel feed line (34) and through which, at the primary side, there flows a medium which transports solar heat.

14. The power plant as claimed in claim 13, **characterized in that** the medium which transports solar heat is water or steam or oil.

15. The power plant as claimed in claim 13 or 14, **characterized in that** an intermediate circuit (36) with a second heat exchanger (37) is arranged between the solar heat source (33, 37) and the first heat exchanger (32).

16. The power plant as claimed in one of claims 9 to 15, **characterized in that** the gas turbine (11) is in the form of a sequential-combustion gas turbine with two combustion chambers (14, 16) and two turbines (15, 17), and **in that** the fuel for both combustion chambers (14, 16) is preheated by means of solar heat.

17. The power plant as claimed in one of claims 9 to 16, **characterized in that** the gas turbine (11) is part of a combined cycle power plant (10) which comprises a water/steam circuit (20).

## Revendications

1. Procédé pour augmenter le rendement d'une centrale d'énergie (10) qui est équipé d' une turbine à gaz ( 11 ), procédé dans lequel un combustible qui est fourni à la turbine à gaz ( 11 ) est préchauffée, **caractérisé en ce que** la chaleur solaire est utilisée pour le préchauffage du combustible.

2. Procédé selon la revendication 1, **caractérisé en ce que** la chaleur solaire est généré dans un générateur solaire (33) et est transféré par l'intermédiaire d'un premier échangeur de chaleur ( 32 ) et un premier moyen de transfert de chaleur au carburant qui est fourni à l' turbine à gaz ( 11 ).

3. Procédé tel que revendiqué dans la revendication 2, **caractérisé en ce que** la chaleur solaire est transférée du réseau solaire ( 33 ) pour le premier milieu de transfert de chaleur par l'intermédiaire d' un circuit intermédiaire ( 36 ).

4. Procédé selon la revendication 3 , **caractérisé en ce que** , pour le transfert de la chaleur solaire pour le combustible , de l'eau est chauffé au moyen de la chaleur solaire.

5. Procédé selon la revendication 3 , **caractérisé en ce que** , pour le transfert de la chaleur solaire pour le combustible , de la vapeur est générée au moyen de la chaleur solaire.

6. Procédé tel que revendiqué dans la revendication 3 , **caractérisé en ce que** , pour le transfert de la chaleur solaire pour le carburant , l'huile est chauffée au moyen de la chaleur solaire.

7. Procédé selon l'une des revendications 1 à 6, **caractérisé en ce que** le gaz naturel est utilisé comme combustible , et **en ce que** le gaz naturel est préchauffé à plus de 50 ° C au moyen de la chaleur solaire.

8. Procédé selon la revendication 7 , **caractérisé en ce que** le gaz naturel est préchauffé à plus de 150 ° C au moyen de la chaleur solaire.

9. Une centrale électrique ( 10) pour la mise en oeuvre du procédé, comprenant une turbine à gaz (11) avec un compresseur ( 13a, 13b) pour comprimer l'air de combustion , une chambre de combustion ( 14, 16) dans laquelle le gaz chaud est généré par la combustion d' un combustible au moyen d' air comprimé de combustion, une turbine ( 15, 17) dans lequel le gaz chaud généré est détendu , effectuant un travail , et des moyens ( 32, 34 ) pour préchauffer le combustible qui est fourni à la chambre de combustion ( 14 , 16), **caractérisé en ce que** les moyens de préchauffage (32, 34 ) sont reliés à une source ( 33, 37 ) pour la chaleur solaire.

10. La centrale électrique selon la revendication 9, **caractérisé en ce que** la source de la chaleur solaire est un panneau solaire ( 33 ).

11. La centrale électrique selon la revendication 10 , **caractérisé en ce que** le générateur solaire (33) comprend des collecteurs paraboliques d'auge ( 28 ), des éléments de Fresnel ou une installation d' héliostat.

12. La centrale électrique selon la revendication 8 , **caractérisé en ce que** la source de la chaleur solaire comprend un accumulateur de chaleur ( 37 ) pour la chaleur solaire.

13. La centrale selon l'une des revendications 9 à 12, **caractérisé en ce que** les moyens de préchauffage comprennent un premier échangeur de chaleur ( 32) qui est monté dans la conduite d'alimentation en carburant ( 34 ) et à travers laquelle , au niveau du côté primaire, il circule un moyen qui transporte de la chaleur solaire.

14. La centrale électrique selon la revendication 13 , **caractérisé en ce que** le milieu qui transporte la chaleur solaire est de l'eau ou de la vapeur ou de l'huile.

15. La centrale électrique selon la revendication 13 ou 14, **caractérisé en ce qu'**un circuit intermédiaire ( 36 ) avec un second échangeur de chaleur ( 37 ) est disposé entre la source de chaleur solaire ( 33, 37) et le premier échangeur de chaleur (32 ).

16. La centrale selon l'une des revendications 9 à 15, **caractérisé en ce que** la turbine à gaz ( 11 ) est sous la forme d' une turbine à gaz séquentielle - combustion avec deux chambres de combustion (14, 16 ) et deux turbines ( 15, 17), et **en ce que** le carburant pour les deux chambres de combustion (14 , 16) est préchauffé par la chaleur solaire.

17. La centrale selon l'une des revendications 9 à 16, **caractérisé en ce que** la turbine à gaz (11) fait partie d' une centrale électrique à cycle combiné ( 10), qui comprend un mélange eau / circuit de vapeur ( 20 ).
